# EUROPÄISCHE PATENTANMELDUNG

(11) **EP 1 221 347 A2**
(43) Veröffentlichungstag der Anmeldung: **10.07.2002**
(21) Anmeldenummer: 01127821.5
(22) Anmeldetag: 22.11.2001
(51) Int. Cl.: B05D 7/02, B05D 3/08, B05D 3/14, B05D 3/06

(54) **Verfahren zur Aufbringung einer fluoralkylfunktionellen Organopolysiloxan-Beschichtung mit beständigen Wasser und Öl abweisenden Eigenschaften auf polymere Substrate**

(30) Priorität: 05.01.2001 DE 10100383
(71) Anmelder: Degussa Aktiengesellschaft, 40474 Düsseldorf (DE); Creavis Gesellschaft für Technologie und Innovation mbH, 45764 Marl (DE)
(72) Erfinder: Hommes, Peter, Dr., 97299 Zell am Main (DE); Schleich, Bernhard, Dr., 45657 Recklinghausen (DE); Oles, Markus, Dr., 45525 Hattingen (DE); Jenkner, Peter, Dr., 79618 Rheinfelden (DE); Just, Eckhard, 79618 Rheinfelden (DE)

(57) **Zusammenfassung**

Die vorliegende Erfindung betrifft ein Verfahren zur Erzeugung sehr dünner, stark hydrophober und oleophober Schichten auf polymeren Substraten. Die erfindungsgemäßen Schichten sind in kochendem Wasser stabil und verhalten sich resistent gegen das Scheuern mit Kunststoffvliesen unter Druck. Nach dem beschriebenen Verfahren werden Substratoberflächen mit physikalischen Methoden vorbehandelt. Die anschließende Beschichtung mit einer Lösung von fluoralkylfunktionellen Organopolysiloxanen in Wasser oder Alkohol und Tempern der Substrate bei höherer Temperatur führt zu den gewünschten Eigenschaften.

## Beschreibung

Die vorliegende Erfindung betrifft ein Verfahren zur Beschichtung eines polymeren Substrats mit einer siliciumorganische Verbindung, wobei man die Oberfläche des Substrats vor der Beschichtung durch Anwendung einer physikalischen Methode vorbehandelt. Ferner betrifft die vorliegende Erfindung Öl, Wasser und Schmutz abweisende Schichten und beschichtete Substrate bzw. entsprechende Artikel, die nach dem hier beschriebenen Verfahren erhältlich sind, sowie die Verwendung solcher Beschichtungen.

Vielfach sind für technische Prozesse und Gegenstände des Alltags hydrophobe und oleophobe Oberflächen erforderlich. Der Grund hierfür kann die Wasser abweisende Wirkung, z. B. bei Kunststoffabdeckungen und Sichtfenstern, sein. Es kann aber auch erforderlich sein, die Haftung beispielsweise von Schmutzpartikeln, Lebensmitteln, Mikroorganismen, Farben, Tinten, Harzen oder Klebstoffen auf entsprechenden Oberflächen wirkungsvoll zu verhindern. Daraus ergeben sich zusätzliche Anforderungen an die Beschichtung solcher Substrate. Sie muss beispielsweise selbst gut haften, so weit wie möglich mechanisch stabil sein, über optische Transparenz verfügen, ein Mindestmaß an Flexibilität aufweisen und das Substrat auch auf der Nanometerskala dicht bedecken. Müssen Oberflächentexturen auf der zu hydrophobierenden Oberfläche bei dem Prozess erhalten bleiben, so darf die Beschichtung maximal eine Dicke aufweisen, die 1 % der Texturgröße ausmacht.

Es sind zahllose Ansätze literaturbekannt, wie man ein solches Problem unter Zuhilfenahme teilweise von Silanen und Fluorverbindungen und gegebenenfalls physikalischen Methoden angehen kann.

Eine einfache Vorgehensweise, um Grenzflächeneigenschaften einer Niedrigenergieoberfläche mit den Materialeigenschaften eines üblichen Halbzeugs zu verbinden, ist das Auflaminieren von Fluorpolymeren auf Halbzeugen aus Polymethylmethacrylat (PMMA) oder Polycarbonat (PC) (JP 09-316830). Die Deckfolie verleiht die Grenzflächeneigenschaften, führt aber zu einer Verschlechterung der Transmission. Ein beträchtlicher Nachteil der Methode ist es, dass nur ebene Gegenstände dem Verfahren zugänglich sind und dass Folien nur sehr grobe Texturen auf der Oberfläche wiedergeben können.

Dünnere Polymerfilme lassen sich gewährleisten, wenn die organofluorhaltigen Polymerfilme auch durch Beschichtung des Substrats mit entsprechenden Lösungen aufgebaut werden. Dabei werden häufig Silane als Haftvermittler zwischen Substrat und Beschichtung eingesetzt. Beispielsweise behandelt man die polymeren Substrate zunächst mit 3-Aminopropyltriethoxysilan vor und bringt anschließend eine Lösung auf, welche Fluorpolymere, wie Vinylidenfluorid-Copolymere (JP 08-277379) oder Poly(perfluorbutenylvinylether) (JP 04-326965), enthalten. Je nach Vorgehensweise und weiteren Bestandteilen erhält man z. B. eine äußerst harte, kratzbeständige, fest anhaftende und Schmutz abweisende Beschichtung. Die Vorgehensweise ist allerdings kompliziert, da in den beschriebenen Verfahren mehrere Komponenten nacheinander in mehreren Verfahrensschritten aufgebracht werden müssen. Das Eintrocknen von Polymerfilmen führt bei texturierten Oberflächen wegen Grenzflächeneffekten zu Benetzungsproblemen. Erhebungen werden nicht beschichtet und Täler egalisiert.

In anderen Verfahren werden ebenfalls lackartige Beschichtungssysteme angewandt und nachträglich mit Fluoralkyltrialkoxisilanen modifiziert um die Oberflächenenergie herabzusetzen. Um entsprechende fluororganische Silane fest anzubinden, ist es eine gebräuchliche Vorgehensweise (JP 01-110588, JP 07-238229), zunächst die Substratoberfläche mit Metalloxiden zu belegen. Dies können Al₂O₃, Zr0₂ oder SiO₂ sein.

Eine Belegung der Substratoberfläche mit einem Oxid kann auch durch Zumischen von Tetramethoxysilan zu einem Acryl-Urethanlack erreicht werden, der durch UV-Behandlung ausgehärtet wird. Die Nachbehandlung, beispielsweise mit Perfluoroctylethylentrimethoxysilanen, führt durch Kondensation zur Ausbildung von kovalenten Bindungen zwischen der Metalloxid- und der Alkoxysilaneinheit. Auf diese Weise lassen sich kratzbeständige, Schmutz abweisende Oberflächen generieren, welche gegenüber Wasser einen Kontaktwinkel von ungefähr 100 bis 110° aufweisen und deren Kontaktwinkel nach zwanzigmaligem Wischen mit einem Tuch um etwa 9° sinkt.

Feine Silicapartikel lassen sich mit Perfluoroctylethyltrichlorsilanen funktionalisieren und können anschließend in einem UV-härtbarem Lack suspendiert werden (JP 09-220518). Die Aushärtung dieser Matrix führt zu Beschichtungen, welche PMMA verstärkt Wasser abweisende Eigenschaften verleiht.

Einfacher ist der direkte Einsatz von Gemischen aus Perfluorhexylethylentrimethoxysilan, seinen Hydrolyseprodukten und Acrylmonomeren in einem Lack. Beschichtung und UV-Härtung führt zu Polymerfilmen, die gut am Substrat anhaften und über Anti-Fouling-Eigenschaften verfügen (JP 10-104403). Bei der Verwendung von Lacken ist der Einfluss auf die Licht-Transmission durch Reflexion an mehreren Grenzflächen unterschiedlicher optischer Dichte generell nachteilig. Werden zusätzlich Metalloxidpartikel eingesetzt, treten leicht zusätzlich Streueffekte an den Partikeln auf. Die Schichtdicke des Lacks verhindert zudem das Beschichten von feinen texturierten Oberflächen und führt zu den bereits beschriebenen Benetzungsproblemen. Auch mangelnde Elastizität und Schlagzähigkeit solcher Schichten können sich nachteilig auswirken.

Zur Beeinflussung der Grenzflächenchemie müssen nur die oberen Atomlagen der Grenzfläche verändert werden. Es reichen also sehr dünne fluororganische Schichten aus. Der Einsatz von Niederdruckplasmen als Methode für die Erzeugung dünner Beschichtungen ist literaturbekannt. Ein mögliches Verfahren ist die Plasmapolymerisation unter Einsatz von Perfluor-Cycloalkanen, welches zur dünnen Belegung von Substraten mit Polyperfluoralkanen führt (EP 0 590 007).

Beschichtungen lassen sich auch mit der Plasmapolymerisation von Vinylmethylsilanen oder Vinyltrimethoxysilanen erreichen. Hierbei bilden sich Polymere mit seitenständigen Silanen- oder Siloxanästen, die zur Beschichtung verschiedener Substrate eingesetzt werden können. Die Beschichtungen weisen Unebenheiten von 100 bis 200 nm auf und zeigen Randwinkel gegen Wasser von fast 140° (DE 195 43 133).

Der hohe apparative und zeitliche Aufwand für die Niederdruck-Plasmapolymerisation hat ihre Anwendung gegenüber nasschemischen Verfahren aber bislang limitiert.

Plasmen und andere physikalische Verfahren werden seit langem auch verwendet, um Polyolefine für die Lackierung vorzubereiten und so Bindungsstellen für die Anbindungen der Beschichtung an das Substrat zu generieren. Auch andere physikalische Verfahren finden für diesen Zweck Anwendung und haben sich für Kunststoffe bewährt. Das bereits zitierte Schutzrecht JP 04-326965 beschreibt beispielsweise das vorbereitende Belichten einer PC-Platte mit UV-Licht vor dem Behandeln mit 3-Aminopropyltrimethoxysilan.

EP 0 846 717, EP 0 846 716 und EP 0 846 715 offenbaren u.a. nasschemische Verfahren, welche auch die Beschichtung von Kunststoffen mit dünnen Polysiloxanschichten zum Inhalt haben. Hier finden fluoralkylfunktionelle organopolysiloxanhaltige Zusammensetzungen auf Basis von Wasser und/oder Alkoholen Anwendung. In einem Schritt werden hier die Haftung auf der Oberfläche über die Silan- und Siloxangruppen und das Vermitteln der gewünschten Grenzflächeneigenschaften über entsprechende Fluoralkylgruppen erreicht. Eine vorhergehende Lackbeschichtung ist nicht erforderlich, und das Verfahren ist ausgesprochen einfach.

Weiterhin ist es bekannt (P. K. Jenkner; Thin Film Fluoroalysilane Coatings; Fluorine In Coatings III; 1999; ISBN 09505319960), dass diese Art der Beschichtung zu Schichtdicken von nur 2 bis 3 nm führt. Damit ist die Bedingung optimaler Transparenz gegeben und auch keine Beeinträchtigung von Oberflächentexturen zu erwarten. Diese Eigenschaften sind insbesondere dann zu erreichen, wenn die Proben tauchbeschichtet werden und die Polysiloxanschicht sich durch Selbstorganisation bildet.

Ziel der vorliegenden Erfindung war es, eine weitere Möglichkeit zur Oberflächenmodifizierung von polymeren Werkstoffen bereit zu stellen, wobei mit einem möglichst einfachen Verfahren hydrophobe und oleophobe Beschichtungen höchster Qualität erzielt werden. Dies beinhaltet insbesondere die Hydrolysebeständigkeit und eine verbesserte Resistenz gegen Abrasion.

Die gestellte Aufgabe wird erfindungsgemäß entsprechend den Angaben der Patentansprüche gelöst.

Überraschender Weise wurde gefunden, dass eine physikalische Vorbehandlung von polymeren Substraten vor der Einwirkung von fluoralkylfunktionellen Silanen oder fluoralkylfunktionellen organopolysiloxanhaltigen Zusammensetzungen auf Alkohol-, Wasser/Alkohol- oder Wasserbasis vorteilhaft ist. Auf eine vorhergehende Lackbeschichtung der Substrate als Bindeschicht oder die Einführung anderer Bindungspartner in Form von Metalloxiden kann dadurch verzichtet werden. Eine solche erfindungsgemäße Vorbehandlung ist geeigneterweise die Anwendung von Gleichspannungs- und Niederfrequenz-Glimmentladung, Hochfrequenz-Glimmentladung, unselbstständiger Glimmentladung, Koronaentladung, Beflammung, elektromagnetischer Strahlung, Mikrowellenentladung/ECR-Plasmen und Niederdruckplasma auf die polymeren Substrate wobei die Vorbehandlung bevorzugt in einer Luft-, Stickstoff- und/oder Argonatmosphäre durchgeführt wird.

Gegenstand der vorliegenden Erfindung ist daher ein Verfahren zur Beschichtung eines polymeren Substrats mit einer fluoralkylgruppenenthaltenden Siliciumverbindung, wobei man die Oberfläche des Substrats vor der Beschichtung durch Anwendung einer physikalischen Methode vorbehandelt, in dem man die Oberfläche eines polymeren Substrats einer Koronaentladung aussetzt, einer Beflammung unterzieht, eine Glimmentladung anwendet, mit speziellen elektromagnetischen Wellen bestrahlt und/oder durch eine Plasmabehandlung vorbehandelt.

Dabei behandelt man das polymere Substrat vorzugsweise unter vermindertem Druck vor, insbesondere bei einem Druck von 0,001 mbar bis 0,99 bar abs. Besonders bevorzugt führt man beim erfindungsgemäßen Verfahren eine Plasmabehandlung bei einem Druck von 0,002 mbar bis 0,1 bar abs. durch. Als Plasmaquelle ist beispielsweise ein Niederdruckplasma, eine Gleichspannungsniederfrequenzglimmentladung, eine Gleichspannungshochfrequenzglimmentladung, ein Mikrowellen/ECR-Plasma, eine unselbstständige Glimmentladung, eine Koronaentladung und/oder eine Beflammung geeignet.

Vorzugsweise kann man Mikrowellenplasma oder Koronaplasma mit einer Methangasflamme kombinieren.

Weiterhin bevorzugt ist die erfindungsgemäße Belichtung von Kunststoffen mittels UV-Strahlung einer Wellenlänge von 10 bis 400 nm, insbesondere von 150 bis 350 nm. Besonders bevorzugt sind dabei UV Strahlung einer Wellenlänge von 308 oder 172 nm mit einer Excimerlampe (z. B. der Fa. Heraeus Noblelight) und ein Vakuum von <10 mbar. Ebenfalls bevorzugt ist die erfindungsgemäße Anwendung von Niederdruckplasmen (z. B. in einem Gerät der Fa. Europlasma, gezündet bei 13,56 kHz, 600 W) inerter Gasen auf polymere Substrate, wobei man besonders bevorzugt unter einem konstanten Luft-, Stickstoff- und/oder Argonstrom, beispielsweise bei rd. 16,5 mbar, das erfindungsgemäße Verfahren durchführt.

Beim erfindungsgemäßen Verfahren führt man die Vorbehandlung der Substratoberfläche, insbesondere die Bestrahlung, für 5 Sekunden bis 30 Minuten, vorzugsweise für 10 Sekunden bis 5 Minuten, besonders vorzugsweise für 1 bis 2 Minuten, durch.

Die Erfindung bezieht sich im Allgemeinen auf alle gängigen Kunststoffwerkstoffe, d. h. auf polymere Substrate, wie Homo- oder Co-Polymer und Polymerlegierungen, sowie auf heterogene Mischungen von Kunststoffen untereinander oder mit unlöslichen Bestandteilen, wie Pigmenten oder Füllstoffen. Auch dünne Kunststoffschichten auf anderen Materialien, wie Laminate oder Lacke, sind erfindungsgemäße Substrate. Die erfindungsgemäßen Substrate können gänzlich oder in Teilen aus Polyamid, Polyimid, Polyester, Polycarbonat, Polyurethan, Polysulfone und anderen Polykondensaten bestehen. Weiterhin betrifft die Erfindung Materialien, die gänzlich oder in Teilen aus Polyolefinen, wie Polyethylen und Polypropylen, Polymeren von Acryl-, Methacryl- und anderen Vinylverbindungen, wie Polymethylmethacrylat, Polyethern, Polyaminen, Polystyrol, Polyoxymethylen und anderen Polymerisaten sowie Phenol-, Melamin- und Epoxidharzen bestehen können. Die Werkstoffe können thermoplastische, duromere oder elastomere Eigenschaften besitzen.

Erfindungsgemäß lässt man nach der Vorbehandlung ein fluoralkylfunktionelles Alkoxysilan oder Silanol, konzentriert oder gelöst bzw. verdünnt, wie es beispielsweise aus EP 1 033 395 hervorgeht, oder eine fluoralkylfunktionelle organopolysiloxanhaltige Zusammensetzung auf Alkohol-, Wasser/Alkohol- oder Wasserbasis auf die Kunststoffoberflächen einwirken. Solche fluoralkylfunktionellen organopolysiloxanhaltigen Zusammensetzungen sind insbesondere aus EP 0 960 921, EP 0 846 717, EP 0 846 716 sowie EP 0 846 715 zu entnehmen. Es wird darauf hingewiesen, dass der Inhalt von EP 1 033 395, EP 0 960 921, EP 0 846 717, EP 0 846 716 und EP 0 846 715 der Offenbarung der vorliegenden Anmeldung zuzurechnen sind. Die Behandlung des vorbehandelten Substrats mit einer siliciumorganischen Verbindung lässt sich beispielsweise durch einfaches Eintauchen des Substrats in die entsprechenden Zusammensetzungen erreichen. Geeigneterweise bringt man das vorbehandelte Substrat für 1 bis 60 Minuten, vorzugsweise 5 bis 60 Minuten, mit der Zusammensetzung in Kontakt, gegebenenfalls unter gleichzeitigem Einpolieren. Saugfähige Materialien, wie Schwamm oder Tuch, lassen sich mit der jeweiligen Zusammensetzung tränken. Hiermit kann man auch auf einer trockenen, erfindungsgemäß vorbehandelten Werkstoffoberfläche die Zusammensetzungen einpolieren. Auch alle gängigen Sprühverfahren lassen sich mit den besagten silan- bzw. siloxanhaltigen Zusammensetzungen, insbesondere den fluoralkylfunktionellen organopolysiloxanhaltigen Zusammensetzungen durchführen.

Beim erfindungsgemäßen Verfahren schließt sich geeigneterweise nach der Aufbringung der fluoralkylfunktionellen Zusammensetzungen eine Wärmebehandlung an. Erfindungsgemäß beschichtete Substrate werden vorzugsweise bei 80 bis 150 °C für 5 bis 150 Minuten getempert. Kunststoffe mit einem Glaspunkt von 100 bis 150 °C werden bevorzugt bei 80 °C für 60 Minuten getempert, für Kunststoffe mit einem Glaspunkt von >150 °C wird Tempern bei 120 °C für 30 Minuten bevorzugt.

Im Allgemeinen führt man das erfindungsgemäße Verfahren derart aus, dass man eine in der Regel saubere, trockene und fettfreie Substratoberfläche eines Polymers einer Koronaentladung, einer Beflammung, einer Glimmentladung, speziellen elektromagnetischen Wellen und/oder einem Plasma aussetzt. Diese Art der Vorbehandlung der Substratoberfläche kann man in Luft-, Stickstoff- und/oder Argonatmosphäre durchführen. Im Anschluss an die Vorbehandlung der Substratoberfläche bringt man die fluoralkylfunktionelle Siliciumverbindung auf. Das so an der Oberfläche vorbehandelte und mit einer fluoralkylfunktionellen Siliciumverbindung versehene Substrat kann man anschließend trocknen und zusätzlich thermisch nachbehandeln.

Erfindungsgemäß erhaltene Schichten bzw. Beschichtungen mit hydrophoben, oleophoben sowie Schmutz abweisenden Eigenschaften auf polymeren Substraten zeichnen sich durch eine weit überdurchschnittliche Qualität aus, insbesondere hinsichtlich Transparenz, Abrieb- und Witterungsbeständigkeit.

Gegenstand der vorliegenden Erfindung sind daher auch Öl, Wasser und Schmutz abweisende Beschichtungen, d. h. Schichten bzw. "coatings", auf einem polymeren Substrat sowie polymere Substrate mit einer Öl, Wasser und Schmutz abweisenden Beschichtung, welche nach dem erfindungsgemäßen Verfahren erhältlich sind.

Ferner sind Gegenstand der vorliegenden Erfindung Artikel, die auf einer Öl, Wasser und Schmutz abweisenden erfindungsgemäßen Beschichtung oder auf einem erfindungsgemäßen Substrat basieren.

Weiterhin ist Gegenstand die Verwendung einer erfindungsgemäßen Beschichtung auf Kunststoffteilen, auf Spritzgussteilen, auf Folien, auf Textilien oder eines erfindungsgemäß beschichteten Substrats als Schutzfolie, als Bauteile oder für Außenanwendungen.

Erfindungsgemäß erhältliche Beschichtungen, d. h. Schichten oder "coatings", sowie erfindungsgemäß beschichtete Substrate zeigen optimale Transparenz. Ferner zeichnen sich erfindungsgemäße Beschichtungen durch ausgezeichnete Öl, Wasser und Schmutz abweisende Eigenschaften aus. Der Kontaktwinkel für Wasser liegt häufig in hervorragender Weise bei 110 bis 130° Fortschreitwinkel. Kochen in VE-Wasser über 3 Stunden führt bei erfindungsgemäß beschichteten Substraten zu einem geringeren Verlust . an Beschichtungsmaterial durch Hydrolyse als bei beschichteten, jedoch nicht erfindungsgemäß vorbehandelten Substraten. Definiertes Wischen auf den Substraten mit einem Vlies aus Polyethylenterephthalat (PET) führt bei erfindungsgemäß beschichteten Substraten zu einem geringeren Verlust an Beschichtungsmaterial durch Abrasion als bei nicht vorbehandelten Substraten. Beides zeigt sich durch höhere Kontaktwinkel von Wasser. Damit kann durch das erfindungsgemäße Verfahren ein weit über dem Durchschnitt liegender Qualitätsstandard erzielt werden.

Die Erfindung wird durch die nachfolgenden Beispiele näher erläutert ohne den Gegenstand der vorliegenden Anmeldung zu beschränken.

### Beispiele

### Legende der Abkürzungen:

- RT: Raumtemperatur
- PET: Poly(ethylenterephthalat)

### Substratmaterialien:

- PC: Polycarbonat (Macrolon)
- PMMA: Polymethylmethacrylat
- POM: Polyoxymethylen
- PP: Polypropylen

### Eingesetzte DYNASYLAN®-Verbindungen:

- DYNASYLAN® F 8261: Tridecafluor-1,1,2,2-tetrahydrooctyl-1-triethoxysilan
- DYNASYLAN® F 8850: 3,3,4,4,5,5,6,6,7,7,8,8,8-Tridecafluroroctyltriethoxyoligosiloxan, hergestellt durch HCI-katalysierte Kondensation von 3,3,4,4,5,5,6,6,7,7,8,8,8-Tridecaflurooctyltriethoxysilan mit 0,8 Mol/Mol H₂O (Dimere, Trimere, Tetramere), 50 Gew.-%ig in Ethanol
- DYNASYLAN® F 8262: alkoholische Lösung von aktiviertem fluoralkylfunktionellem Organosilan analog Beispiel C / 5a, DE 199 04 132 bzw. EP 1 033 395 (Jenkner et al., Degussa-Hüls AG). Für DYNASYLAN® F 8262 wird anstelle von i-Propanol Ethanol eingesetzt. Zusammensetzung: 1,0 Gew.-% 3,3,4,4,5,5,6,6,7,7,8,8,8-Tridecafluoroctyltriethoxysilan, 0,126 Gew.-% H₂O, 0,074 Gew.-% HCI (absolut), 0,1 Gew.-% SnCl₂x2H₂O, 98,7 Gew.-% Ethanol
- DYNASYLAN® F 8810: 10 Gew.-%ige wässrige Lösung eines oligomerisierten Cokondensats aus 3,3,4,4,5,5,6,6,7,7,8,8,8-Tridecafluoroctyltriethoxysilan und 3-Aminopropyltriethoxysilan analog Beispiel H2, DE 198 23 390 (Standke et al., Degussa-Hüls AG)

### 1. DYNASYLAN® F 8261-Beschichtungslösung:

In 97,7 g absolutem Ethanol wird DYNASYLAN® F 8261 unter Rühren gelöst. Es werden nacheinander 0,2 g Salzsäure (37 %), 1 g Wasser und 0,1 g SnCl₂-Hydrat zugesetzt und mindestens 12 bis 24 Stunden bei RT gerührt. Das Molverhältnis bez. Silaneinheit : HCl : Wasser verhält sich 1 : 1 : 28.

### 2. DYNASYLAN® F 8262-Beschichtungslösung:

A. DYNASYLAN® F 8262-Lösung wird verwendet, wie geliefert.
B. DYNASYLAN® F 8262-Lösung wird mit 0,1 % SnCl₂-Hydrat versetzt und mindestens 12 bis 24 Stunden bei RT gerührt.

### 3. DYNASYLAN® F 8850- Beschichtungslösung:

In 97,7 g absolutem Ethanol wird VPS 8850 unter Rühren gelöst. Es werden nacheinander 0,2 g Salzsäure (37 %), 1 g Wasser und 0,1 g SnCl₂-Hydrat zugesetzt und mindestens 12 bis 24 Stunden bei RT gerührt. Nach ca. 1 bis 2 Stunden ist das Reaktionsgemisch homogen.

### 4. DYNASYLAN® F 8810- Beschichtungslösung:

A. DYNASYLAN® F 8810-Lösung wird verwendet, wie geliefert.
B. Zu 100g VE-Wasser werden unter Rühren 20g DYNASYLAN® F 8810-Lösung zugesetzt. Das Reaktionsgemisch wird mit HCI (37 %) auf pH 1,5 angesäuert (Kontrolle durch pH-Elektrode) und 12 bis 24 Stunden bei RT gerührt.

### Beispiel 1

Eine Probenplatte aus PMMA , PC, POM oder PP wird in eine Vakuumkammer eingelegt und Vakuum von mindestens 1 mbar angelegt. Unter diesen Bedingungen wird die Probe 2 Minuten bei 172 nm mit Hilfe einer Excimerlampe (Fa. Heraeus Noblelight) belichtet, nach 5 Minuten entspannt und die Probe in einer Fotowanne 60 Minuten in eine Beschichtungslösung 1, 2, 3 oder 4 eingelegt. Eine Probe ohne diese Vorbehandlung wird ebenfalls beschichtet. Die Probe wird aus der Lösung entnommen, mit sauberer Druckluft trocken geblasen und bei 80 °C für 60 Minuten getempert. Anschließend werden die Fortschreitwinkel bestimmt, die Probe 3 Stunden in kochendem Wasser extrahiert und erneut die Fortschreitwinkel bestimmt.

### Ergebnisse bezüglich Beispiel 1:

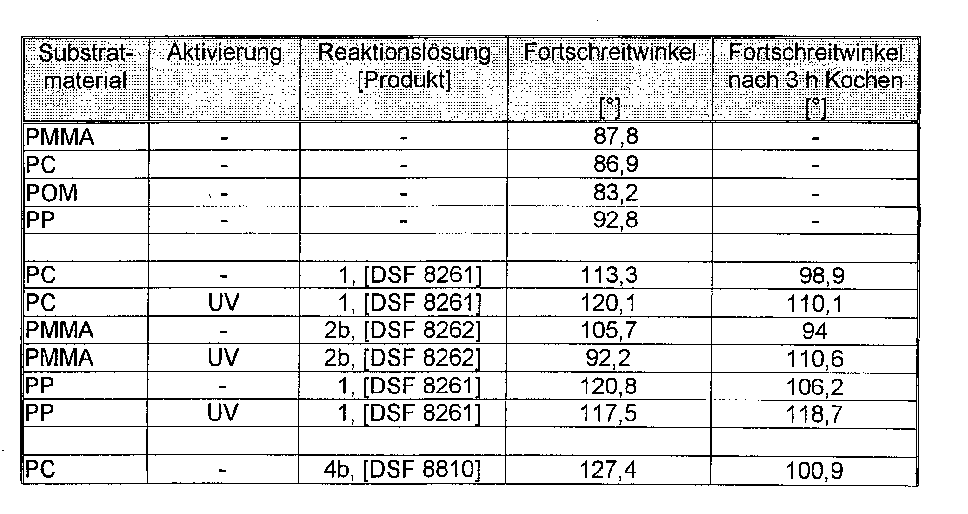

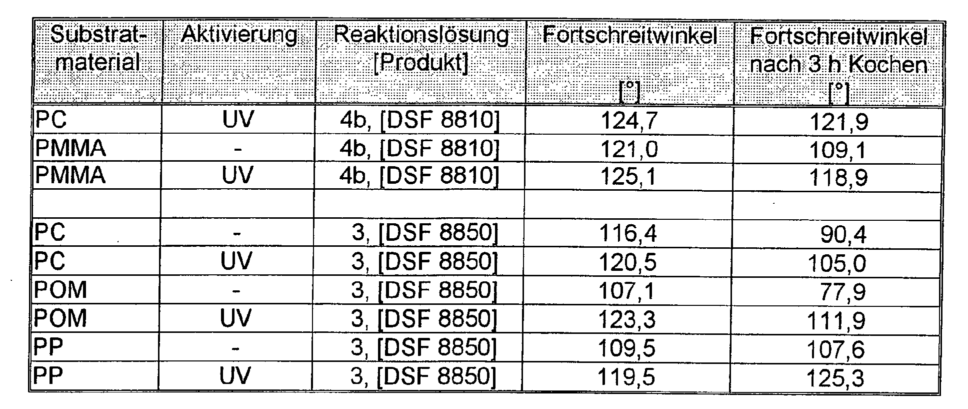

### Beispiel 2

Eine Platte aus PMMA, PC oder PP wird in die Vakuumkammer einer Plasmaanlage (z. B. Fa. Europlasma) eingelegt und Vakuum von 16,5 mbar unter einem konstanten Gasstrom von Stickstoff, Luft oder Argon angelegt. Es wird ein Plasma gezündet (13,56 kHz, 600 W) und die Probe 2 Minuten behandelt. Nach weiteren 5 Minuten mit Stickstoff entspannt und die Probe entnommen. Innerhalb von 6 Stunden wird sie gemeinsam mit einer nicht vorbehandelten Probe in einer Fotowanne 60 Minuten in die Beschichtungslösung eingelegt. Die Proben werden aus der Lösung entnommen, mit sauberer Druckluft trocken geblasen und bei 80 °C für 60 Minuten getempert. Anschließend werden die Fortschreitwinkel gegen Wasser bestimmt, die Probe 3 Stunden in kochendem Wasser extrahiert und erneut die Fortschreitwinkel gegen Wasser bzw. Hexadecan bestimmt.

### Ergebnisse bezüglich Beispiel 2:

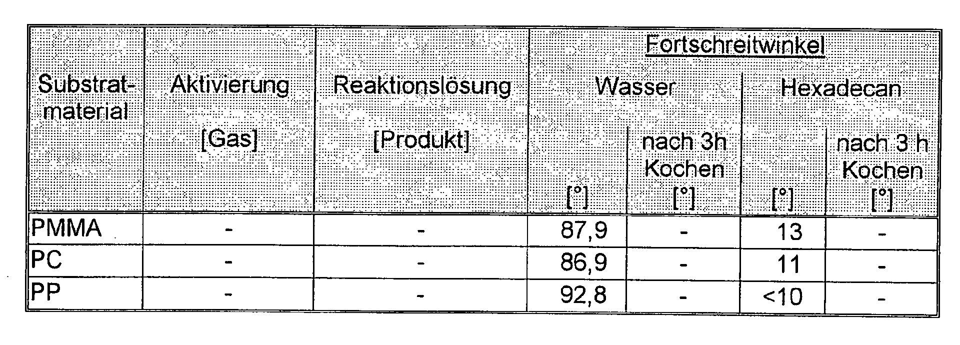

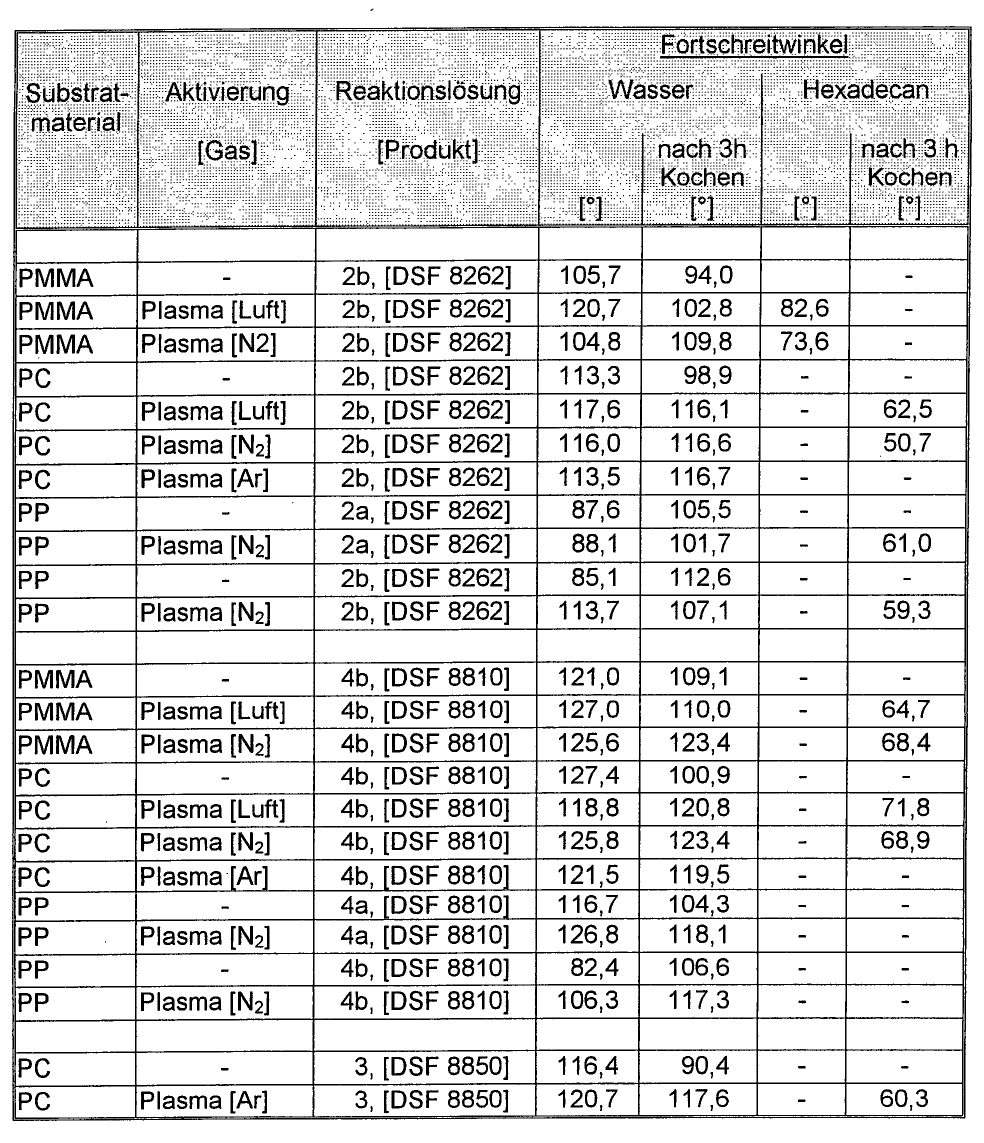

### Beispiel 3

Proben aus PC und PMMA werden behandelt wie im Beispiel 2. Es werden die Fortschreitwinkel gegen Wasser bestimmt und anschließend die Proben zerteilt und abrasiv behandelt. Bei einem Abrasionszyklus wird die Probe mit einem Auflagegewicht von 100 g/cm² auf einem PET-Vlies (250 g/m²) angedrückt und eine Strecke von 10 cm darauf bewegt. Nach der jeweiligen Anzahl der gewünschten Zyklen werden erneut die Fortschreitwinkel bestimmt.

### Ergebnisse bezüglich Beispiel 3:

Die Fortschreitwinkel sind in folgenden Diagrammen gegen die Abrasionszyklen aufgetragen.

### Erklärung der Zeichnungslegenden in den Abbildungen 1 bis 4:

- ohne Vorbehandlung:: PMMA, beschichtet mit Reaktionslösung (2a bzw. 4a)
- N₂-Plasma:: PMMA, aktiviert mit N₂-Plasma und konsekutiv mit Reaktionslösung beschichtet
- Vergleich PMMA:: PMMA, unbehandelt

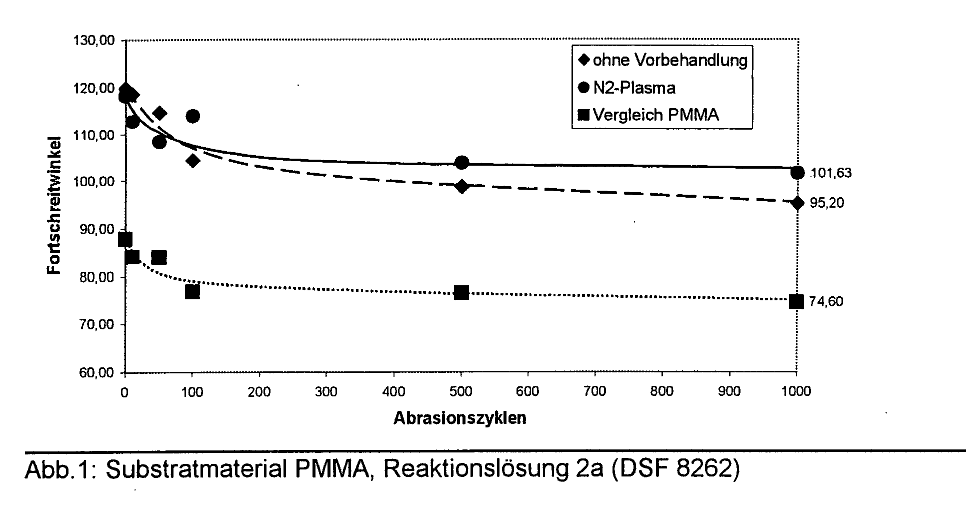

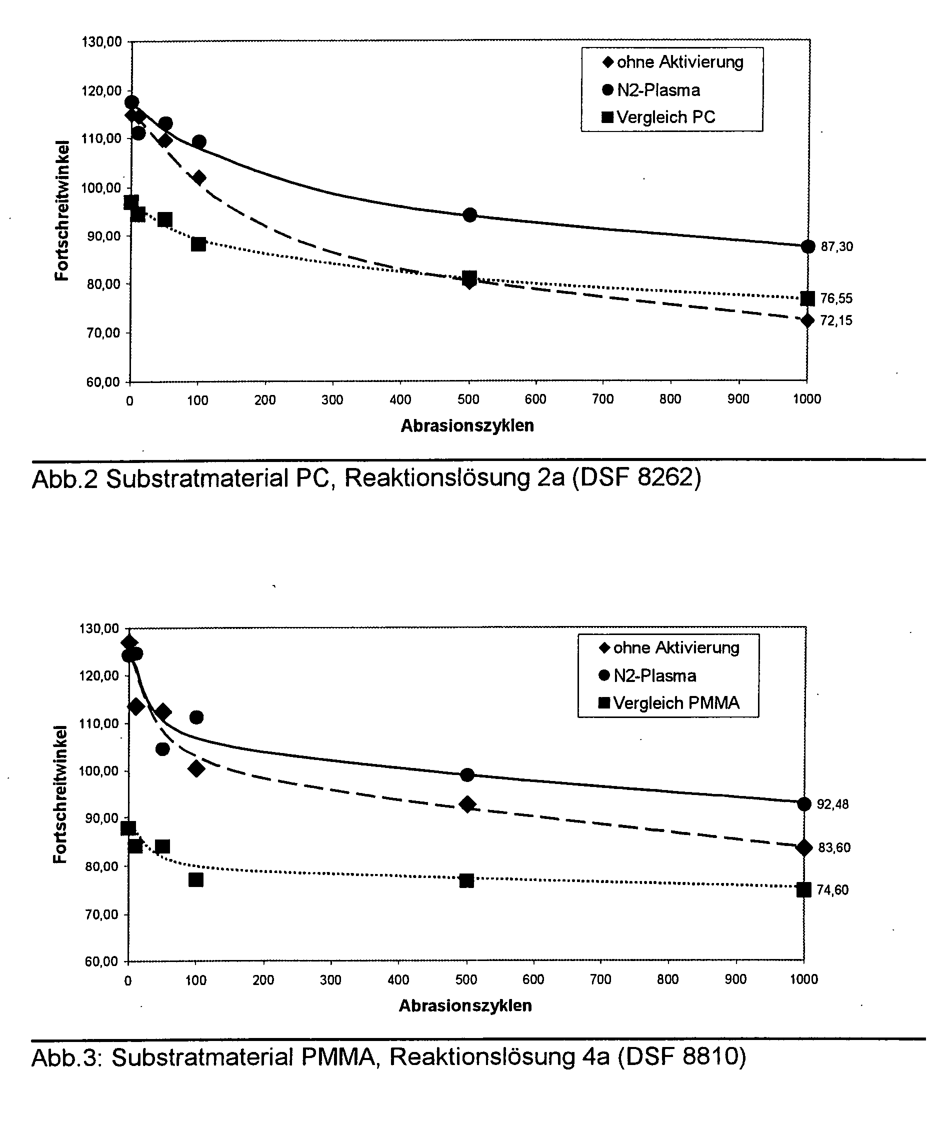

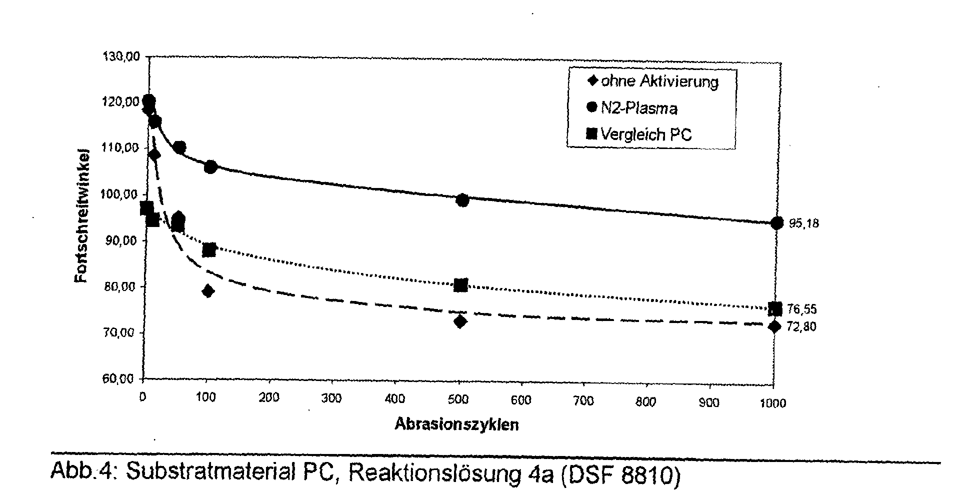

## Patentansprüche

1. Verfahren zur Beschichtung eines polymeren Substrats mit einer fluoralkylgruppenenthaltenden Siliciumverbindung, wobei man die Oberfläche des Substrats vor der Beschichtung durch Anwendung einer physikalischen Methode vorbehandelt, in dem man die Oberfläche eines polymeren Substrats einer Koronaentladung aussetzt, einer Beflammung unterzieht, eine Glimmentladung anwendet, mit speziellen elektromagnetischen Wellen bestrahlt und/oder durch eine Plasmabehandlung vorbehandelt.

2. Verfahren nach Anspruch 1,
**dadurch gekennzeichnet**,
das man das polymere Substrat unter vermindertem Druck in einer Luft-, Stickstoff- und/oder Argonatmosphäre vorbehandelt.

3. Verfahren nach Anspruch 2,
**dadurch gekennzeichnet,**
**dass** man die Vorbehandlung bei einem Druck von 0,001 mbar bis 0,99 bar abs. durchführt.

4. Verfahren nach einem der Ansprüche 1 bis 3,
**dadurch gekennzeichnet,**
**dass** man eine Plasmabehandlung bei einem Druck von 0,002 mbar bis 0,1 bar abs. durchführt.

5. Verfahren nach einem der Ansprüche 1 bis 4,
**dadurch gekennzeichnet,**
**dass** man die Substratoberfläche mit Licht einer Wellenlänge von 10 bis 400 nm bestrahlt.

6. Verfahren nach einem der Ansprüche 1 bis 5,
**dadurch gekennzeichnet,**
**dass** man die Substratoberfläche für 5 Sekunden bis 30 Minuten vorbehandelt.

7. Verfahren nach Anspruch 1 oder 2,
**dadurch gekennzeichnet,**
**dass** man die Substratoberfläche einem Niederdruckplasma, einer Gleichspannungsniederfrequenzglimmentladung, einer Gleichspannungshochfrequenzglimmentladung, einem Mikrowellen/ECR-Plasma, einer unselbstständigen Glimmentladung, einer Koronaentladung und/oder einer Beflammung aussetzt.

8. Verfahren nach einem der Ansprüche 1 bis 7,
**dadurch gekennzeichnet,**
**dass** man als polymeres Substrat Polymere von Acryl-, Methacryl- oder VinylVerbindungen, Polymere aus Phenol-, Melamin- sowie Epoxidharzen, Polycarbonat, Polyolefine, Polyether, Polyoxymethylen, Polystyrol, Polyamin, Polyamid, Polyimid, Polyurethan, Polysulfon oder Polyester einsetzt.

9. Verfahren nach einem der Ansprüche 1 bis 8,
**dadurch gekennzeichnet,**
**dass** man auf die vorbehandelte Substratoberfläche ein fluoralkylgruppenenthaltendes monomeres Alkoxysilan, ein fluoralkylgruppenenthaltendes monomeres Silanol, ein fluoralkylgruppenenthaltendes Siloxan oder ein Mittel, das mindestens eine der zuvor genannten Siliciumverbindungen enthält, aufbringt und die so behandelte Substratoberfläche gegebenenfalls trocknet und/oder thermisch nachbehandelt.

10. Öl, Wasser und Schmutz abweisende Beschichtung auf einem polymeren Substrat, erhältlich nach einem der Ansprüche 1 bis 9.

11. Polymeres Substrat mit einer Öl, Wasser und Schmutz abweisenden Beschichtung, erhältlich nach einem der Ansprüche 1 bis 9.

12. Artikel, die auf einer Öl, Wasser und Schmutz abweisenden Beschichtung nach Anspruch 10 oder auf einem Substrat nach Anspruch 11 basieren.

13. Verwendung einer Beschichtung nach Anspruch 10 auf Kunststoffteilen, auf Spritzgussteilen, auf Folien oder auf Textilien.

14. Verwendung eines beschichteten Substrats nach Anspruch 11 oder 12 als Kunststoffteil, als Schutzfolie, als Bauteil oder für Außenanwendungen.
